# EUROPEAN PATENT APPLICATION

(11) **EP 4 627 932 A1**
(43) Date of publication of application: **08.10.2025**
(21) Application number: 23897764.9
(22) Date of filing: 28.11.2023
(51) Int. Cl.: A23L 2/38, A23L 2/00, A23L 2/54, A23L 33/135, A23L 33/16

(54) **PACKAGED SUGAR-FREE BEVERAGE**

(30) Priority: 29.11.2022 JP 2022190086
(71) Applicant: KIRIN HOLDINGS KABUSHIKI KAISHA, Nakano-ku, Tokyo 164-0001 (JP)
(72) Inventor: YOKOYAMA, Kiichi, Tokyo 164-0001 (JP); YOTSUMOTO, Yuko, Tokyo 164-0001 (JP); SUZUKI, Mihoko, Tokyo 164-0001 (JP); NAKAJIMA, Makiko, Tokyo 164-0001 (JP)
(74) Representative: Hoffmann Eitle
(86) International application number: PCT/JP2023/042507
(87) International publication number: WO 2024/117116

(57) **Abstract**

An object of the present invention is to provide a packaged sugar-free beverage such that "in-mouth astringency" specific to a sugar-free beverage containing magnesium in a prescribed concentration is suppressed, a production method therefor, and others. The solution involves a packaged sugar-free beverage comprising 500 million cells/L or more (e.g., 20 billion cells/L or more) of dead bacterial cells of one or more types of lactic acid bacteria and/or bacteria in the present invention 1 and magnesium in a concentration of 1.2 mg/L or more.

## Description

### Technical Field

The present invention relates to a packaged sugar-free beverage containing magnesium and dead bacterial cells of a "lactic acid bacterium" and/or "bacterium capable of activating plasmacytoid dendritic cells", a production method therefor, and others. The present invention relates more specifically to a packaged sugar-free beverage containing magnesium in a prescribed concentration such that specific "in-mouth astringency" is suppressed while such specific "in-mouth astringency" (i.e., "astringency causing the tongue and throat area to tighten"; more specifically, "sensation causing the tongue and throat area to tighten like cramping, leading to fatigue") should occur during drinking, a production method therefor, and others.

### Background Art

The innate immune system is primarily responsible for the primary response to bacterial or viral infection, with dendritic cells, in particular, being strong and important component cells. In addition, among dendritic cells, plasmacytoid dendritic cells (pDC) are the major producers of various interferons (IFN) such as type I interferon, which shows growth-inhibitory activity against viruses, and play a crucial role in antiviral host defense (Patent Document 1).

Meanwhile, magnesium is one of the essential minerals and is present in bones and body fluids, playing an important role in various enzymatic actions. Magnesium, together with calcium, forms bones and plays an important function involving, for instance, muscles and nerves. It is said that many people have insufficient magnesium intake due to the westernization of their diets, etc.

Sports drinks are known as beverages for replenishing, for instance, water and magnesium. Magnesium is known to have a bitter taste, and in beverages containing relatively large amounts of magnesium, sweeteners are added to alleviate the bitter taste (the Background Art of Patent Document 2). Patent Document 2 discloses a method for suppressing a bitter taste, etc., caused by magnesium or the like by blending natural high-intensity sweeteners, namely Rebaudioside A and Mogroside V.

However, it has been unknown that magnesium-containing sugar-free beverages have a new problem of specific "in-mouth astringency" (i.e., "astringency causing the tongue and throat area to tighten"; more specifically, "sensation causing the tongue and throat area to tighten like cramping, leading to fatigue") and that the above-described specific "in-mouth astringency" can be suppressed by including, in such sugar-free beverages, a prescribed concentration of dead bacterial cells of a "lactic acid bacterium" and/or a "bacterium capable of activating plasmacytoid dendritic cells".

### Prior Art Documents

### Patent Documents

Patent Document 1: International Publication WO 2012/091081
Patent Document 2: Japanese unexamined Patent Application Publication No. 2019-129769

### Summary of the Invention

### Object to be Solved by the Invention

The present inventors have found that the new problem of specific "in-mouth astringency" occurs in magnesium-containing sugar-free beverages.

An object of the present invention is to provide a packaged sugar-free beverage such that "in-mouth astringency" specific to a sugar-free beverage containing magnesium in a prescribed concentration is suppressed, a production method therefor, and others.

### Means to Solve the Object

The present inventors have conducted intensive research to solve the problem in the present invention and, as a result, have found that the above-described specific "in-mouth astringency" can be suppressed by including, in a sugar-free beverage containing magnesium in a prescribed concentration, 500 million cells/L or more (e.g., 20 billion or cells/L or more) of dead bacterial cells of a "lactic acid bacterium" and/or a "bacterium capable of activating plasmacytoid dendritic cells". Then, the present invention has been completed.

Specifically, the present invention provides the following items of the invention and others.
(1) A packaged sugar-free beverage comprising 500 million cells/L or more (e.g., 20 billion cells/L or more) of dead bacterial cells of one or more types of lactic acid bacteria and magnesium in a concentration of 1.2 mg/L or more;
(2) the packaged sugar-free beverage according to the above (1), which is a carbonated beverage having a gas pressure of from 0.1 to 0.3 MPa;
(3) the packaged sugar-free beverage according to the above (1) or (2), further comprising one or more organic acids, wherein a total concentration of the organic acids is from 0.005 to 0.5% by weight;
(4) a packaged sugar-free beverage comprising 500 million cells/L or more (e.g., 20 billion cells/L or more) of dead bacterial cells of one or more types of lactic acid bacteria and magnesium in a concentration of 1.2 mg/L or more, wherein the lactic acid bacteria are one or more types selected from the group consisting of bacteria of the genus *Lactobacillus,* bacteria of the genus *Streptococcus,* bacteria of the genus *Lactococcus,* bacteria of the genus *Leuconostoc,* bacteria of the genus *Pediococcus,* bacteria of the genus *Enterococcus,* bacteria of the genus *Oenococcus,* bacteria of the genus *Bifidobacterium,* bacteria of the genus *Lentilactobacillus,* bacteria of the genus *Weissella,* and bacteria of the genus *Tetragenococcus*;
(5) the packaged sugar-free beverage according to the above (4), wherein the lactic acid bacteria are *Lactobacillus rhamnosus;*
(6) a packaged sugar-free beverage comprising 500 million cells/L or more (e.g., 20 billion cells/L or more) of dead bacterial cells of one or more types of bacteria capable of activating plasmacytoid dendritic cells, and magnesium in a concentration of 1.2 mg/L or more;
(7) a method for producing a packaged sugar-free beverage containing magnesium in a concentration of 1.2 mg/L or more, the method comprising including, in the beverage, 500 million cells/L or more (e.g., 20 billion cells/L or more) of dead bacterial cells of one or more types of bacteria capable of activating plasmacytoid dendritic cells in the production of the packaged sugar-free beverage;
(8) a method for producing a packaged sugar-free beverage containing magnesium in a concentration of 1.2 mg/L or more, the method comprising including, in the beverage, 500 million or more cells /L (e.g., 20 billion cells/L or more) of dead bacterial cells of one or more types of lactic acid bacteria in the production of the packaged sugar-free beverage;
(9) a method of suppressing in-mouth astringency during drinking of a packaged sugar-free beverage containing magnesium in a concentration of 1.2 mg/L or more, the method comprising including, in the beverage, 500 million cells/L or more (e.g., 20 billion cells/L or more) of dead bacterial cells of one or more types of bacteria capable of activating plasmacytoid dendritic cells in the production of the packaged sugar-free beverage; and
(10) a method of suppressing in-mouth astringency during drinking of a packaged sugar-free beverage containing magnesium in a concentration of 1.2 mg/L or more, the method comprising including, in the beverage, 500 million cells/L or more (e.g., 20 billion cells/L or more) of dead bacterial cells of one or more types of lactic acid bacteria in the production of the packaged sugar-free beverage.

The present invention also provides the following items of the invention and others.
[1] A packaged sugar-free beverage comprising 20 billion cells/L or more of dead bacterial cells of one or more types of lactic acid bacteria and magnesium in a concentration of 1.2 mg/L or more;
[2] the packaged sugar-free beverage according to the above [1], which is a carbonated beverage having a gas pressure of from 0.1 to 0.3 MPa;
[3] the packaged sugar-free beverage according to the above [1] or [2], further comprising one or more organic acids, wherein a total concentration of the organic acids is from 0.005 to 0.5% by weight;
[4] a method for producing a packaged sugar-free beverage containing magnesium in a concentration of 1.2 mg/L or more, the method comprising including, in the beverage, 20 billion cells/L or more of dead bacterial cells of one or more types of lactic acid bacteria in the production of the packaged sugar-free beverage; and
[5] a method of suppressing in-mouth astringency during drinking of a packaged sugar-free beverage containing magnesium in a concentration of 1.2 mg/L or more, the method comprising including, in the beverage, 20 billion cells/L or more of dead bacterial cells of one or more types of lactic acid bacteria in the production of the packaged sugar-free beverage.

### Effect of the Invention

The present invention can provide a packaged sugar-free beverage such that "in-mouth astringency" specific to a sugar-free beverage containing magnesium in a prescribed concentration (hereinafter, also simply referred to as "in-mouth astringency") is suppressed, a production method therefor, and others.

### Brief Description of Drawings

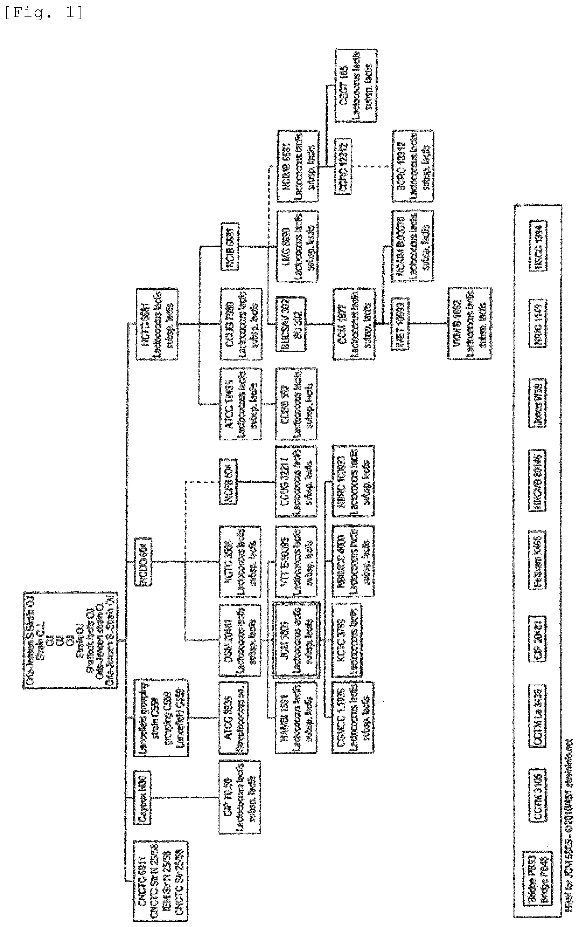

[Figure 1] Figure 1 is a diagram illustrating the relationship between *Lactococcus lactis* subsp. *lactis* JCM5805 strain and equivalent strains to that strain (strains derived from that strain and strains from which that strain is derived).

### Mode of Carrying Out the Invention

The present invention includes embodiments of, for instance,
[1] a packaged sugar-free beverage comprising 500 million cells/L or more (e.g., 20 billion cells/L or more) of dead bacterial cells of one or more types of bacteria capable of activating plasmacytoid dendritic cells, and magnesium in a concentration of 1.2 mg/L or more (hereinafter, also referred to as a "beverage of the present invention 1");
[2] a packaged sugar-free beverage comprising 500 million cells/L or more (e.g., 20 billion cells/L or more) of dead bacterial cells of one or more types of lactic acid bacteria and magnesium in a concentration of 1.2 mg/L or more (hereinafter, also referred to as a "beverage of the present invention 2");
[3] a method for producing a packaged sugar-free beverage containing magnesium in a concentration of 1.2 mg/L or more, the method comprising including, in the beverage, 500 million cells/L or more (e.g., 20 billion cells/L or more) of dead bacterial cells of one or more types of bacteria capable of activating plasmacytoid dendritic cells in the production of the packaged sugar-free beverage (hereinafter, also referred to as a "production method of the present invention 1");
[4] a method for producing a packaged sugar-free beverage containing magnesium in a concentration of 1.2 mg/L or more, the method comprising including, in the beverage, 500 million cells/L or more (e.g., 20 billion cells/L or more) of dead bacterial cells of one or more types of lactic acid bacteria in the production of the packaged sugar-free beverage (hereinafter, also referred to as a "production method of the present invention 2");
[5] a method of suppressing in-mouth astringency during drinking of a packaged sugar-free beverage containing magnesium in a concentration of 1.2 mg/L or more, the method comprising including, in the beverage, 500 million cells/L or more (e.g., 20 billion cells/L or more) of dead bacterial cells of one or more types of bacteria capable of activating plasmacytoid dendritic cells in the production of the packaged sugar-free beverage (hereinafter, also referred to as a "suppression method of the present invention 1"); and
[6] a method of suppressing in-mouth astringency during drinking of a packaged sugar-free beverage containing magnesium in a concentration of 1.2 mg/L or more, the method comprising including, in the beverage, 500 million cells/L or more (e.g., 20 billion cells/L or more) of dead bacterial cells of one or more types of lactic acid bacteria in the production of the packaged sugar-free beverage (hereinafter, also referred to as a "suppression method of the present invention 2").

### (Bacterium capable of activating pDC)

The "bacterium capable of activating pDC" in the present invention 1 (hereinafter, also referred to as the "bacterium in the present invention 1") is not particularly limited, and refers to, for example, a lactic acid bacterium, acetic acid bacterium, bacterium of the genus *Escherichia,* bacterium of the genus *Bacillus,* or cyanobacterium that can activate pDC. Examples include one or more types of bacteria selected from the group consisting of lactic acid bacteria, acetic acid bacteria, and bacteria of the genus *Bacillus.* The bacterium in the present invention 1 is dead bacterial cells.

The "bacterium capable of activating pDC" in the present invention 1 can induce the production of IFN. It is preferable that the IFN is at least one of Type I IFN (type I interferon), Type II IFN (type II interferon), or Type III IFN (type III interferon). The Type I IFNs refer to cytokines that are considered effective against viral infection and examples thereof include IFN-α (including, for instance, subtype 1, 2, 4, 5, 6, 7, 8, 10, 13, 14, 16, 17, or 21) or IFN-β. The Type II IFNs include IFN-γ and the Type III IFNs include IFN-λ. It is preferable that the "bacterium capable of activating pDC" in the present invention 1 has activity to induce the production of at least Type I IFN.

The IFN, the production of which can be induced by the "bacterium capable of activating pDC" in the present invention 1, is not particularly limited as long as the IFN belongs to any of Type I IFN, Type II IFN, or Type III IFN, and is preferably at least one kind selected from the group consisting of IFN-α, IFN-β and IFN-λ. It is more preferable that at least one of the IFNs is IFN-α; it is more preferable that at least one of the IFNs is IFN-α, and the IFNs are two or more kinds selected from the group consisting of IFN-α, IFN-β, and IFN-λ; and it is particularly preferable that at least two of the two or more kinds of IFNs are IFN-α and IFN-β.

Whether or not the bacterium can activate pDC may be checked by whether pDC phagocytose bacteria, whether cell protrusions appear on the surface of pDC that phagocytose bacteria, or whether pDC that phagocytose bacteria produce IFN (e.g., Type I IFN and/or Type III IFN) when the bacterium is presented to pDC.

The phagocytosis of pDC or the appearance of cell protrusions on the surface of pDC may be checked by, for instance, microscopy or observation using flow cytometry or the like. Preferably, the fluorescent dye-modified bacterium is presented to pDC and the pDC are then observed.

The production of IFN (such as Type I IFN and/or Type III IFN) may be checked, for example, by measuring the amount or concentration of IFN such as IFN-α or IFN-β in the culture system when the bacterium is cultured in the presence of pDC derived from mammalian (e.g., mouse) bone marrow cells.

The IFN concentration can be specifically checked by the following protocols (i) to (iv).
(i) Prepare a cell suspension by suspending erythrocytedepleted mouse-derived bone marrow cells at 1 × 10⁶ cells/mL in RPMI medium prepared at the following composition. <Composition of culture medium>
   ·10 vol% FBS
   ·100 U/mL Penicillin/streptomycin
   ·1 mM Sodium pyruvate
   ·2.5 mM HEPES
   ·1 mass% MEM NEAA
   ·50 µM β-Mercaptoethanol
   ·100 ng/mL Flt-3L
(ii) Seed 1 mL each of the prepared cell suspension and culture it in a CO₂ incubator at 37°C and 5 vol% CO₂ for 1 week to induce pDC.
(iii) Suspend the bone marrow cells containing induced pDC at 2 × 10⁵ cells/mL, seed 200 µL each onto a 96-well plate, and add 2 µL each of a bacterial suspension containing, for instance, lactic acid bacteria adjusted using PBS to a concentration of 1 mg/mL.
(iv) Collect, after 24 hours, the culture supernatant and measure IFN-α concentration by ELISA using an IFN-α assay kit.

The "bacterium capable of activating pDC" in the present invention 1 may be expressed by an indicator of producing 30 pg/mL (preferably 50 pg/mL, more preferably 60 pg/mL, still more preferably 70 pg/mL, 80 pg/mL, 90 pg/mL, 100 pg/mL, 150 pg/mL, still more preferably 200 pg/mL, 210 pg/mL, 220 pg/mL, 230 pg/mL, 240 pg/mL, 250 pg/mL, still more preferably 300 pg/mL, 400 pg/mL, 500 pg/mL, 600 pg/mL, 700 pg/mL, and particularly preferably 800 pg/mL) or more IFN-α, after the "bacterium at a final concentration of 10 µg/mL" has been co-cultured for 24 hours with "bone marrow cells that are at a final concentration of 2 × 10⁵ cells/mL and contains pDC obtained by being collected from mouse bone marrow and cultured in cell culture medium containing 100 ng/mL Flt3-L for 7 days".

The pDC activation by the "bacterium capable of activating pDC" in the present invention 1 may involve the ability to promote the expression of activation markers such as CD80, CD86, or MHC class II.

Examples of the above "lactic acid bacterium capable of activating pDC" include, but are not particularly limited to, a bacterium of the genus *Oenococcus,* a bacterium of the genus *Bifidobacterium,* a bacterium of the genus *Weissella,* a bacterium of the genus *Tetragenococcus,* a bacterium of the genus *Lactococcus,* a bacterium of the genus *Leuconostoc,* a bacterium of the genus *Pediococcus,* a bacterium of the genus *Streptococcus,* a bacterium of the genus *Enterococcus,* or a bacterium of the genus *Lactobacillus.* Preferable examples include a bacterium of the genus *Oenococcus,* a bacterium of the genus *Bifidobacterium,* a bacterium of the genus *Weissella,* a bacterium of the genus *Tetragenococcus,* a bacterium of the genus *Lactococcus,* a bacterium of the genus *Leuconostoc,* a bacterium of the genus *Pediococcus,* a bacterium of the genus *Enterococcus,* or a bacterium of the genus *Lactobacillus.*

Note that examples of the bacterium of the genus *Lactobacillus* in the present invention include a bacterium that was classified in the genus *Lactobacillus* before the reclassification of the genus *Lactobacillus.* The examples include a bacterium newly classified, according to the reclassification of the genus Lactobacillus, into the genus *Acetilactobacillus,* the genus *Agrilactobacillus,* the genus *Amylolactobacillus,* the genus *Apilactobacillus,* the genus *Bombilactobacillus,* the genus *Companilactobacillus,* the genus *Dellaglioa,* the genus *Fructilactobacillus,* the genus *Furfurilactobacillus,* the genus *Holzapfelia,* the genus *Lacticaseibacillus,* the genus *Lactiplantibacillus,* the genus *Lapidilactobacillus,* the genus *Latilactobacillus,* the genus *Lentilactobacillus,* the genus *Levilactobacillus,* the genus *Ligilactobacillus,* the genus *Limosilactobacillus,* the genus *Liquorilactobacillus,* the genus *Loigolactobacillus,* the genus *Paralactobacillus,* the genus *Paucilactobacillus,* the genus *Schleiferilactobacillus,* the genus *Secundilactobacillus,* or the like.

Examples of the above bacterium of the genus *Oenococcus* include *Oenococcus oeni.* Specific examples of the bacterium of the genus *Oenococcus* include *Oenococcus oeni* JCM6125.

Examples of the above bacterium of the genus *Bifidobacterium* include *Bifidobacterium animalis* subsp. *lactis* or *Bifidobacterium longum* subsp. *infantis.* Specific examples of the bacterium of the genus *Bifidobacterium* include *Bifidobacterium animalis* subsp. *lactis* JCM10602 or *Bifidobacterium longum* subsp. *infantis* JCM1222.

Examples of the above bacterium of the genus *Weissella* include *Weissella paramesenteroides* or *Weissella viridescens.* Specific examples of the bacterium of the genus *Weissella* include *Weissella paramesenteroides* JCM9890 or *Weissella viridescens* JCM1174.

Examples of the above bacterium of the genus *Tetragenococcus* include *Tetragenococcus halophilus.* Specific examples of the bacterium of the genus *Tetragenococcus* include *Tetragenococcus halophilus* NRIC0098.

Examples of the above bacterium of the genus *Lactococcus* include *Lactococcus lactis, Lactococcus lactis* subsp. *lactis, Lactococcus garvieae, Lactococcus lactis* subsp. *cremoris,* or *Lactococcus lactis* subsp. *hordniae,* or *Lactococcus plantarum.*

Specific examples of the bacterium of the genus *Lactococcus* include *Lactococcus lactis* subsp. *lactis* JCM5805, *Lactococcus lactis* subsp. *lactis* NBRC12007, *Lactococcus lactis* subsp. *lactis* NRIC1150, *Lactococcus lactis* subsp. *lactis* JCM20101, *Lactococcus lactis* subsp. *lactis* JCM7638, *Lactococcus lactis* subsp. *lactis* ATCC11454, *Lactococcus garvieae* NBRC100934, *Lactococcus lactis* subsp. *cremoris* JCM16167, *Lactococcus lactis* subsp. *cremoris* NBRC 100676, *Lactococcus lactis* subsp. *hordniae* JCM1180 or *Lactococcus lactis* subsp. *hordniae* JCM11040, or *Lactococcus plantarum* JCM11056.

Examples of the above bacterium of the genus *Leuconostoc* include *Leuconostoc carnosum* or *Leuconostoc lactis.* Specific examples of the bacterium of the genus *Leuconostoc* include *Leuconostoc carnosum* JCM9695 or *Leuconostoc lactis* NBRC12455.

Examples of the above bacterium of the genus *Pediococcus* include *Pediococcus acidilactici, Pediococcus pentosaceus, Pediococcus cellicola, Pediococcus claussenii, Pediococcus damnosus, Pediococcus ethanolidurans, Pediococcus inopinatus, Pediococcus parvulus,* or *Pediococcus stilesii.* Specific examples of the bacterium of the genus *Pediococcus* include *Pediococcus acidilactici* JCM8797, *Pediococcus acidilactici* K15, or *Pediococcus damnosus* JCM5886.

Examples of the above bacterium of the genus *Streptococcus* include *Streptococcus thermophilus.* Specific examples of the bacterium of the genus *Streptococcus* include *Streptococcus thermophilus* SBC8781.

Examples of the bacterium of the genus *Enterococcus* include *Enterococcus alcedinis.*

Examples of the bacterium of the genus *Lactobacillus* include *Lactobacillus paracasei, Lactobacillus delbrueckii, Lactobacillus acidophilus, Lactobacillus casei, Lactobacillus fructivorans, Lactobacillus hilgardii, Lactobacillus rhamnosus, Lactobacillus gasseri, Lactobacillus acidophilus, Lactobacillus bulgaricus, Lactobacillus parakefiri, Lactobacillus plantarum, or Lactobacillus pentosus.*

Specific examples of the bacterium of the genus *Lactobacillus* include *Lactobacillus paracasei* KW3110, *Lactobacillus paracasei* MCC1849, *Lactobacillus rhamnosus* GG, *Lactobacillus rhamnosus* GG, *Lactobacillus rhamnosus* CRL1505, *Lactobacillus gasseri* SBT2055, *Lactobacillus acidophilus L-92, Lactobacillus bulgaricus* OLL1073R-1, *Lactobacillus parakefiri (Lentilactobacillus parakefiri* in the new classification) JCM8573, *Lactobacillus plantarum* (*Lactiplantibacillus plantarum* in the new classification) L-137, or *Lactobacillus pentosus* (*Lactiplantibacillus pentosus* in the new classification) ONRICb0240.

Examples of the above "acetic acid bacterium capable of activating pDC" include, but are not particularly limited to, a bacterium of the genus *Gluconacetobacter,* a bacterium of the genus *Acetobacter,* or a bacterium of the genus *Gluconobacter.* Preferred is a bacterium of the genus *Gluconacetobacter.* More preferred is *Gluconacetobacter hansenii.* Still more preferred is *Gluconacetobacter hansenii* GK-1.

Examples of the above *"Bacillus* bacterium capable of activating pDC" include, but are not particularly limited to, *Bacillus coagulans.* Specific examples of the bacterium of the genus *Bacillus* include *Bacillus coagulans* SANK70258.

### (Dead bacterial cells of lactic acid bacterium)

In the present invention 2, dead bacterial cells of one or more types of lactic acid bacteria are used.

The "lactic acid bacterium" is a general term for all the lactic acid bacteria recognized in the classification and is not limited by, for instance, the genus, the species, and the strain. Examples of such a "lactic acid bacterium" include a bacterium that produces a large amount of lactic acid (preferably, 50% or more of the consumed sugar) by lactic acid fermentation of sugar. Examples include a bacterium of the genus *Lactobacillus,* a bacterium of the genus *Streptococcus,* a bacterium of the genus *Lactococcus,* a bacterium of the genus *Leuconostoc,* a bacterium of the genus *Pediococcus,* a bacterium of the genus *Enterococcus,* a bacterium of the genus *Oenococcus,* a bacterium of the genus *Bifidobacterium,* a bacterium of the genus *Weissella,* or a bacterium of the genus *Tetragenococcus.*

Examples of the genus and species of the lactic acid bacterium for dead bacterial cells used in the present invention 2 include, but are not particularly limited to, one or more types of bacteria selected from the group consisting of bacteria of the genus *Lactobacillus,* bacteria of the genus *Streptococcus,* bacteria of the genus *Lactococcus,* bacteria of the genus *Leuconostoc,* bacteria of the genus *Pediococcus,* bacteria of the genus *Enterococcus,* bacteria of the genus *Oenococcus,* bacteria of the genus *Bifidobacterium,* bacteria of the genus *Weissella,* and bacteria of the genus *Tetragenococcus.* Also included are one or more types of bacteria selected from the group consisting of bacteria of the genus *Lactobacillus,* bacteria of the genus *Streptococcus,* bacteria of the genus *Lactococcus,* bacteria of the genus *Leuconostoc,* bacteria of the genus *Pediococcus,* and bacteria of the genus *Enterococcus.* Preferred are one or more types of bacteria selected from the group consisting of bacteria of the genus *Lactococcus.* More preferred are one or more types of bacteria selected from the group consisting of *Lactococcus lactis.* Still more preferred are one or more types of bacteria selected from the group consisting of *Lactococcus lactis* subsp. *lactis.*

More specific preferable embodiments of dead bacterial cells in the present invention 2 include dead bacterial cells of one or more types of bacteria selected from the group consisting of *Lactobacillus acidophilus* (e.g., *Lactobacillus acidophilus* L-92), *Lactobacillus delbrueckii* subsp. *bulgaricus* (e.g., *Lactobacillus bulgaricus* OLL1073R-1), *Lactobacillus delbrueckii* subsp. *delbrueckii, Lactobacillus delbrueckii* subsp. *lactis, Lactobacillus casei, Lactobacillus paracasei* (e.g., *Lactobacillus paracasei* KW3110 and *Lactobacillus paracasei* MCC1849), *Lactobacillus gasseri* (*Lactobacillus gasseri* SBT2055), *Lactobacillus helveticus, Lactobacillus johnsonii, Lactobacillus plantarum* (*Lactiplantibacillus plantarum* in the new classification) (e.g., *Lactiplantibacillus plantarum* L-137), *Lactobacillus brevis, Lactobacillus casei* subsp. *rhamnosus* (e.g., *Lactobacillus rhamnosus* GG, *Lactobacillus rhamnosus* CRL1505), *Lactobacillus pentosus* (*Lactiplantibacillus pentosus* in the new classification) ONRICb0240 or the like, *Lactobacillus fermentum, Lactobacillus fructivorans, Lactobacillus hilgardii, Streptococcus salivarius* subsp. *thermophilus, Lactococcus lactis* subsp. *lactis* (e.g., *Lactococcus lactis* subsp. *lactis* JCM5805, *Lactococcus lactis* subsp. *lactis* NBRC12007, *Lactococcus lactis* subsp. *lactis* NRIC1150, *Lactococcus lactis* subsp. *lactis* JCM20101, *Lactococcus lactis* subsp. *lactis* JCM7638, *Lactococcus lactis* subsp. *lactis* ATCC11454), *Lactococcus lactis* subsp. *lactis* biovar *diacetylactis, Lactococcus lactis* subsp. *cremoris* (e.g., *Lactococcus lactis* subsp. *cremoris* JCM16167, *Lactococcus lactis* subsp. *cremoris* NBRC100676), *Lactococcus raffinolactis, Lactococcus piscium, Lactococcus plantarum* (e.g., *Lactococcus plantarum* JCM11056), *Lactococcus garvieae* (e.g., *Lactococcus garvieae* NBRC100934), *Lactococcus lactis* subsp. *hordniae* (e.g., *Lactococcus lactis* subsp. *hordniae* JCM1180, *Lactococcus lactis* subsp. *hordniae* JCM11040), *Leuconostoc mesenteroides* subsp. *cremoris* (e.g., *Leuconostoc mesenteroides* subsp. *cremoris* JCM16167, *Leuconostoc mesenteroides* subsp. *cremoris* NBRC100676), *Leuconostoc lactis* (e.g., *Leuconostoc lactis* NBRC12455), *Leuconostoc carnosum* (e.g., *Leuconostoc carnosum* JCM9695), *Pediococcus damnosus* (e.g., *Pediococcus damnosus* JCM5886), *Pediococcus pentosaceus, Pediococcus acidilactici* (e.g., *Pediococcus acidilactici* JCM8797 and *Pediococcus acidilactici* K15), *Pediococcus cellicola, Pediococcus claussenii, Pediococcus ethanolidurans, Pediococcus inopinatus, Pediococcus parvulus, Pediococcus stilesii, Enterococcus faecalis, Enterococcus faecium, Enterococcus alcedinis, Oenococcus oeni* (e.g., *Oenococcus oeni* JCM6125), *Bifidobacterium animalis* subsp. *lactis* (e.g., *Bifidobacterium animalis* subsp. *lactis* JCM10602), *Bifidobacterium longum* subsp. *infantis* (e.g., *Bifidobacterium longum* subsp. *infantis* JCM1222), *Weissella paramesenteroides* (e.g., *Weissella paramesenteroides* JCM9890), *Weissella viridescens* (e.g., *Weissella viridescens* JCM1174), and *Tetragenococcus halophilus* (e.g., *Tetragenococcus halophilus* NRIC0098). Also included are dead bacterial cells of one or more types of bacteria selected from the group consisting of *Lactobacillus acidophilus* (e.g., *Lactobacillus acidophilus* L-92), *Lactobacillus delbrueckii* subsp. *bulgaricus* (e.g., *Lactobacillus bulgaricus* OLL1073R-1), *Lactobacillus delbrueckii* subsp. *delbrueckii, Lactobacillus delbrueckii* subsp. *lactis, Lactobacillus casei, Lactobacillus paracasei* (e.g., *Lactobacillus paracasei* KW3110 and *Lactobacillus paracasei* MCC1849), *Lactobacillus gasseri (Lactobacillus gasseri* SBT2055), *Lactobacillus helveticus, Lactobacillus johnsonii, Lactobacillus parakefiri* (*Lentilactobacillus parakefiri* in the new classification) (e.g., *Lactobacillus parakefiri* JCM8573), *Lactobacillus plantarum* (*Lactiplantibacillus plantarum* in the new classification) (e.g., *Lactiplantibacillus plantarum* L-137), *Lactobacillus brevis, Lactobacillus casei* subsp. *rhamnosus* (e.g., *Lactobacillus rhamnosus* GG, *Lactobacillus rhamnosus* CRL1505), *Lactobacillus pentosus* (e.g., *Lactobacillus pentosus* ONRICb0240), *Lactobacillus fermentum, Lactobacillus fructivorans, Lactobacillus hilgardii, Streptococcus salivarius* subsp. *thermophilus, Lactococcus lactis* subsp. *lactis* (e.g., *Lactococcus lactis* subsp. *lactis* JCM5805, *Lactococcus lactis* subsp. *lactis* NBRC12007, *Lactococcus lactis* subsp. *lactis* NRIC1150, *Lactococcus lactis* subsp. *lactis* JCM20101, *Lactococcus lactis* subsp. *lactis* JCM7638, *Lactococcus lactis* subsp. *lactis* ATCC11454), *Lactococcus lactis* subsp. *lactis* biovar *diacetylactis, Lactococcus lactis* subsp. *cremoris* (e.g., *Lactococcus lactis* subsp. *cremoris* JCM16167, *Lactococcus lactis* subsp. *cremoris* NBRC100676), *Lactococcus raffinolactis, Lactococcus piscium, Lactococcus plantarum* (e.g., *Lactococcus plantarum* JCM11056), *Lactococcus garvieae* (e.g., *Lactococcus garvieae* NBRC100934), *Lactococcus lactis* subsp. *hordniae* (e.g., *Lactococcus lactis* subsp. *hordniae* JCM1180, *Lactococcus lactis* subsp. *hordniae* JCM11040), *Leuconostoc mesenteroides* subsp. *cremoris* (e.g., *Leuconostoc mesenteroides* subsp. *cremoris* JCM16167, *Leuconostoc mesenteroides* subsp. *cremoris* NBRC100676), *Leuconostoc lactis* (e.g., *Leuconostoc lactis* NBRC12455), *Leuconostoc carnosum* (e.g., *Leuconostoc carnosum* JCM9695), *Pediococcus damnosus* (e.g., *Pediococcus damnosus* JCM5886), *Pediococcus pentosaceus, Pediococcus acidilactici* (e.g., *Pediococcus acidilactici* JCM8797 and *Pediococcus acidilactici* K15), *Pediococcus cellicola, Pediococcus claussenii, Pediococcus ethanolidurans, Pediococcus inopinatus, Pediococcus parvulus, Pediococcus stilesii, Enterococcus faecalis,* and *Enterococcus faecium.* Preferably included are dead bacterial cells of one or more types of bacteria selected from the group consisting of *Lactobacillus acidophilus, Lactobacillus delbrueckii* subsp. *bulgaricus, Lactobacillus delbrueckii* subsp. *lactis, Lactobacillus delbrueckii* subsp. *delbrueckii, Lactobacillus casei, Lactobacillus paracasei, Lactobacillus gasseri, Lactobacillus helveticus, Lactobacillus johnsonii, Lactobacillus parakefiri* (e.g., *Lactobacillus parakefiri* JCM8573), *Lactobacillus plantarum, Lactobacillus brevis, Lactobacillus casei subsp. rhamnosus (e.g., Lactobacillus rhamnosus GG, Lactobacillus rhamnosus CRL1505), Lactobacillus pentosus, Lactobacillus fermentum, Lactobacillus fructivorans, Lactobacillus hilgardii, Streptococcus salivarius subsp. thermophilus, Lactococcus lactis subsp. lactis, Lactococcus lactis subsp. lactis biovar diacetylactis, Lactococcus lactis subsp. cremoris, Lactococcus raffinolactis, Lactococcus piscium, Lactococcus plantarum, Lactococcus garvieae, Lactococcus lactis* subsp. *hordniae, Leuconostoc mesenteroides subsp. cremoris,* and *Leuconostoc lactis.* More preferably included are dead bacterial cells of one or more types of bacteria selected from the group consisting of *Lactococcus lactis subsp. lactis, Lactococcus lactis biovar diacetylactis, Lactococcus lactis subsp. cremoris, Lactococcus raffinolactis, Lactococcus piscium, Lactococcus plantarum, Lactococcus garvieae,* and *Lactococcus lactis subsp. hordniae.* Still more preferably included are dead bacterial cells of *Lactococcus lactis subsp. lactis.* More preferably included are dead bacterial cells of one or more types of bacteria selected from the group consisting of *Lactococcus lactis subsp. lactis* JCM5805, *Lactococcus lactis subsp. lactis* JCM20101, *Lactococcus lactis subsp. lactis* NBRC12007, and *Lactococcus lactis subsp. lactis* NRIC1150. Particularly preferably included are dead bacterial cells of *Lactococcus lactis subsp. lactis* JCM5805.

In addition, other preferred embodiments of the genus and species of lactic acid bacterium for dead bacterial cells used in the present invention 2 include one or more types of bacteria selected from the group consisting of bacteria of the genus *Lactococcus* and bacteria of the genus *Lactobacillus.* Preferred are one or more types of bacteria selected from the group consisting of *Lactococcus lactis* and *Lactobacillus rhamnosus.* More preferred are one or more types of bacteria selected from the group consisting of *Lactococcus lactis* subsp. *lactis* and *Lactobacillus rhamnosus.*

More specific other preferred embodiments of the dead bacterial cells in the present invention 2 include dead bacterial cells of one or more types of bacteria selected from the group consisting of *Lactococcus lactis subsp. lactis, Lactococcus lactis subsp. lactis biovar diacetylactis, Lactococcus lactis subsp. cremoris, Lactococcus raffinolactis, Lactococcus piscium, Lactococcus plantarum, Lactococcus garvieae, Lactococcus lactis subsp. hordniae, Lactobacillus acidophilus, Lactobacillus delbrueckii* subsp. *bulgaricus, Lactobacillus delbrueckii* subsp. *lactis, Lactobacillus delbrueckii* subsp. *delbrueckii, Lactobacillus casei, Lactobacillus paracasei, Lactobacillus gasseri, Lactobacillus helveticus, Lactobacillus johnsonii, Lactobacillus parakefiri* (e.g., *Lactobacillus parakefiri* JCM8573), *Lactobacillus plantarum, Lactobacillus brevis, Lactobacillus casei subsp. rhamnosus (e.g., Lactobacillus rhamnosus* GG, *Lactobacillus rhamnosus* CRL1505), *Lactobacillus pentosus, Lactobacillus fermentum, Lactobacillus fructivorans,* and *Lactobacillus hilgardii.* Preferred are dead bacterial cells of one or more types of bacteria selected from the group consisting of *Lactococcus lactis* subsp. *lactis* and *Lactobacillus rhamnosus.* More preferred are dead bacterial cells of one or more types of bacteria selected from the group consisting of *Lactococcus lactis subsp. lactis* JCM5805, *Lactococcus lactis subsp. lactis* JCM20101, *Lactococcus lactis subsp. lactis* NBRC12007, *Lactococcus lactis subsp. lactis* NRIC1150, *Lactobacillus rhamnosus* GG, and *Lactobacillus rhamnosus* CRL1505. Particularly preferred are dead bacterial cells of one or more types of bacteria selected from the group consisting of *Lactococcus lactis* subsp. *lactis* JCM5805 and *Lactobacillus rhamnosus* CRL1505. Still more preferred are dead bacterial cells of *Lactococcus lactis* subsp. *lactis* JCM5805 or dead bacterial cells of *Lactobacillus rhamnosus* CRL1505.

Other preferred embodiments of dead bacterial cells in the present invention 2 include those of one or more types selected from the group consisting of bacteria of the genus *Lactococcus.* Preferably included are those of one or more types selected from the group consisting of *Lactococcus lactis* subsp. *lactis* JCM5805, *Lactococcus lactis* subsp. *lactis* NBRC12007, *Lactococcus lactis* subsp. *lactis* NRIC1150, *Lactococcus lactis* subsp. *lactis* JCM20101, *Lactococcus lactis* subsp. *lactis* JCM7638, *Lactococcus lactis* subsp. *lactis* ATCC11454, *Lactococcus garvieae* NBRC100934, *Lactococcus lactis* subsp. *cremoris* JCM16167, *Lactococcus lactis* subsp. *cremoris* NBRC 100676, *Lactococcus lactis* subsp. *hordniae* JCM1180, and *Lactococcus lactis* subsp. *hordniae* JCM11040.

With respect to the bacterial strains of dead bacterial cells as mentioned herein, in the present invention (i.e., the present invention 1 and/or the present invention 2), bacterial strains equivalent to the above bacterial strains are included in the above bacterial strains as long as an effect of suppressing in-mouth astringency is exerted when the dead bacterial cells are contained at a prescribed concentration in a sugar-free beverage containing magnesium in a prescribed concentration. Here, the equivalent bacterial strain refers to a bacterial strain derived from the above-mentioned bacterial strain or a bacterial strain from which the above-mentioned bacterial strain is derived or a descendant bacterial strain of the above-mentioned bacterial strain. The equivalent bacterial strains may be stored in other bacterial strain repositories. Figure 1 shows the bacterial strains derived from *Lactococcus lactis* subsp. *lactis* JCM5805, and bacterial strains from which *Lactococcus lactis* subsp. *lactis* JCM5805 is derived. Equivalent bacterial strains of *Lactococcus lactis* subsp. *lactis* JCM5805 as shown in Figure 1 can also be used for dead bacterial cells in the present invention, as long as the dead bacterial cells produce an effect of suppressing in-mouth astringency when they are contained at a prescribed concentration in a sugar-free beverage containing magnesium in a prescribed concentration. As used herein, the case of *Lactococcus lactis* subsp. *lactis* JCM5805 (*Lactococcus lactis* JCM5805) also includes these equivalent bacterial strains. In addition, the case of *Lactobacillus rhamnosus* CRL1505 also includes these equivalent bacterial strains. Further, the JCM strains among the above strains of lactic acid bacterium are available from the Microbial Materials Development Laboratory, RIKEN BioResource Center (3-1-1, Koyadai, Tsukuba, Ibaraki); the NBRC strains are available from Biological Resource Center, the National Institute of Technology and Evaluation (2-5-8, Kazusakamatari, Kisarazu, Chiba); the NRIC strains are available from the Culture Collection Center at Tokyo University of Agriculture (1-1-1 Sakuragaoka, Setagaya-ku, Tokyo); and the ATCC strains are available from American Type Culture Collection (USA), respectively.

*Lactococcus lactis* subsp. *lactis* JCM5805 strain can be obtained from the Microbial Materials Development Laboratory, RIKEN BioResource Center as described above. However, it is possible to use, in the present invention, the same strain as JCM5805 strain, which strain is stored in repositories other than the Microbial Materials Development Laboratory, RIKEN BioResource Center. Specifically, the same strain as JCM5805 strain can be obtained from the Biological Resource Center, the National Institute of Technology and Evaluation (2-5-8, Kazusakamatari, Kisarazu, Chiba), the Culture Collection Center at Tokyo University of Agriculture (1-1-1 Sakuragaoka, Setagaya-ku, Tokyo), American Type Culture Collection (USA), and others.

The "dead bacterial cells of a lactic acid bacterium and/or a bacterium in the present invention 1" herein are not particularly limited as long as they are dead bacterial cells of a lactic acid bacterium and/or a bacterium in the present invention 1, and may be a dried material or nondried material. The dried material is preferred from the viewpoint of storage stability of dead bacterial cells of a lactic acid bacterium and/or a bacterium in the present invention 1. Preferable examples include dried powder.

The method of preparing dead bacteria cells of a lactic acid bacterium and/or bacterium in the present invention 1 is not particularly limited. Examples include: a method of sterilizing a culture medium in which a lactic acid bacterium and/or a bacterium in the present invention 1 is cultured, and then collecting the bacterial cells by, for instance, filtration or centrifugation; and a method of collecting, from a culture medium in which a lactic acid bacterium and/or a bacterium in the present invention 1 is cultured, bacterial cells by, for instance, filtration or centrifugation and then sterilizing them. Further drying and/or crushing treatment may be optionally performed.

Note that the means of sterilization is not restricted, and conventional means to kill bacteria, such as UV or γ-ray irradiation, as well as heating, may be used. In addition, sterilization treatment during beverage preparation may be used to kill a lactic acid bacterium and/or a bacterium in the present invention 1 in the beverage.

In the present invention, the bacterial cell concentration of dead bacterial cells of one or more types of lactic acid bacteria and/or bacteria in the present invention 1 in a packaged sugar-free beverage is not particularly limited. The total concentration of dead bacterial cells of a lactic acid bacterium and/or a bacterium in the present invention 1 is, for example, 500 million cells/L or more, 1 billion cells/L or more, 1.3 billion cells/L or more, 5 billion cells/L or more, 15 billion cells/L or more, or 20 billion cells/L or more. From the viewpoint of producing a higher effect of suppressing in-mouth astringency, the total concentration is preferably 25 billion cells/L or more and more preferably 50 billion cells/L or more, 100 billion cells/L or more, 200 billion cells/L or more, or 400 billion cells/L or more. In addition, the upper limit of bacterial cell concentration of dead bacterial cells of one or more types of lactic acid bacteria and/or bacteria in the present invention 1 is not particularly limited. The total number of dead bacterial cells of a lactic acid bacterium and/or a bacterium in the present invention 1 is, for example, 8 trillion cells/L or less, 6 trillion cells/L or less, 4 trillion cells/L or less, 2 trillion cells/L or less, 1 trillion cells/L or less, 500 billion cells/L or less, 350 billion cells/L or less, 200 billion cells/L or less, 175 billion cells/L or less, 150 billion cells/L or less, etc. These lower and upper limits may be each optionally combined within the range of possible combinations of lower and upper limits.

The bacterial cell concentration of dead bacterial cells of a lactic acid bacterium and/or a bacterium in the present invention 1 in a packaged sugar-free beverage may be adjusted by adjusting the number of dead bacterial cells of the lactic acid bacterium and/or the bacterium in the present invention 1 as blended in the beverage.

Note that as a method of measuring the number of dead bacterial cells of a lactic acid bacterium and/or a bacterium in the present invention 1 in a packaged sugar-free beverage, a known method of counting the number of lactic acid bacteria and/or bacteria in the present invention 1 is included without any particular limitation. Examples include direct microscopy, particle electrical sensing zone method, PCR, or flow cytometry. Preferred is flow cytometry.

### (Magnesium)

The magnesium concentration of a packaged sugar-free beverage in the present invention is 1.2 mg/L or more. As used herein, the term "magnesium concentration" means the concentration of magnesium dissolved in water in a packaged sugar-free beverage. Thus, for example, magnesium contained in dead bacterial cells of a lactic acid bacterium and/or a bacterium in the present invention 1 is not taken into account for the magnesium concentration herein.

The magnesium concentration of a packaged sugar-free beverage in the present invention is not particularly limited as long as the concentration is 1.2 mg/L or more. From the viewpoint of providing stronger in-mouth astringency such that the significance of the present invention is more appreciated, the magnesium concentration is preferably 2.4 mg/L or more, more preferably 4.9 mg/L or more, still more preferably 7.3 mg/L or more, still more preferably 9.7 mg/L or more, still more preferably 12.1 mg/L or more, still more preferably 24.3 mg/L or more, still more preferably 77.7 mg/L or more, still more preferably 109.3 mg/L or more, and still more preferably 145.7 mg/L or more.

The upper limit of magnesium concentration in a packaged sugar-free beverage is not particularly limited, but is, for example, 150 mg/L or less, 200 mg/L or less, 250 mg/L or less, or 500 mg/L or less. These lower and upper limits may be each optionally combined.

The magnesium concentration in a packaged sugar-free beverage may be adjusted by adjusting the amount of one or more materials selected from the group consisting of magnesium, magnesium compounds, and magnesium-containing compositions blended in the beverage.

Note that as a method of measuring a magnesium concentration in a packaged sugar-free beverage, a known measurement method may be included without particular limitation. Examples include inductively coupled plasma optical emission spectrometry (ICP-OES).

The ratio of the bacterial cell concentration to the magnesium concentration in the present invention, i.e., (Content [100 million cells/L] of dead bacterial cells of a lactic acid bacterium and/or a bacterium in the present invention 1)/(Magnesium concentration [mg/L]), is not particularly limited. From the viewpoint of producing a higher effect of suppressing in-mouth astringency, the lower limit is, for example, 0.4 or more, 1 or more, 80 or more, 200 or more, or 400 or more, and the upper limit is, for example, 60000 or less, 30000 or less, or 8000 or less. These lower and upper limits may be each optionally combined.

As the above magnesium compounds, water-soluble magnesium compounds are preferable. Among them, preferred is magnesium chloride or magnesium sulfate. Among them, more preferred is magnesium chloride. In addition, as the above magnesium-containing compositions, compositions containing the above magnesium compound may be used. As the above magnesium compound and magnesium composition, a commercially available one may be used.

### (Sugar-free beverage)

As used herein, the term "sugar-free beverage" means a beverage containing less than 0.5 g of sugars per 100 mL of the beverage. The term "sugars" above means one or more sugars selected from the group consisting of crystalline sugars and non-crystalline sugars. Examples of the above "crystalline sugar" include a monosaccharide (e.g., fructose, glucose, tagatose, arabinose) and a disaccharide (e.g., lactose, trehalose, maltose, sucrose). Examples of the above "non-crystalline sugar" include syrup and isomerized liquid sugar (e.g., fructose-glucose liquid sugar).

The sugar concentration of a packaged sugar-free beverage in the present invention is not particularly limited as long as the concentration is less than 0.5 g of sugars per 100 mL of the beverage. It is preferable that the amount of sugars per 100 mL of the beverage is 0.25 g or less, 0.2 g or less, 0.15 g or less, 0.1 g or less, 0.5 g or less, 0.2 g or less, 0.1 g or less, 0.05 g or less, or 0.01 g or less. More preferred is a sugar-free beverage or a beverage without blended sugars.

### (Carbon dioxide gas)

The packaged sugar-free beverage of the present invention does not have to be a carbonated beverage, but it is preferred to be a carbonated beverage from the viewpoint of suppressing in-mouth astringency more. Examples of the "carbonated beverage" herein include a carbonated beverage having a beverage gas pressure of 0.05 to 0.5 MPa. Preferred is 0.1 to 0.3 MPa, 0.15 to 0.3 MPa, or 0.15 to 0.25 MPa in the carbonated beverage.

As used herein, the gas pressure refers to a gas internal pressure of a packaged sugar-free beverage at 1 atmospheric pressure and 20°C. The measurement include: after a sample is set to 20°C, installing a gas internal pressure meter; opening a stopper once and performing a snifting operation; immediately closing the stopper and shaking vigorously; and converting, into MPa, the value when the pressure reaches a constant value.

### (Optional components)

The packaged sugar-free beverage of the present invention may or may not contain any one or more additives selected from organic acids, pigments, flavoring agents, acidulants (excluding organic acids), sugar alcohols, high-intensity sweeteners, antioxidants, preservatives, thickening stabilizers, emulsifying agents, and pH-adjusting agents.

As an embodiment of the present invention, the packaged sugar-free beverage may contain either or both of sugar alcohol and high-intensity sweetener, but may contain neither sugar alcohol nor high-intensity sweetener. Examples of the above "sugar alcohol" include maltitol, lactitol, sorbitol, mannitol, xylitol, and erythritol. Examples of the above "high-intensity sweetener" include acesulfame potassium (acesulfame K), sucralose, stevia, licorice root extract, thaumatin, glycyrrhizin, saccharin, and aspartame.

### (Organic acid)

The packaged sugar-free beverage of the present invention may be free of any organic acid, but it is preferred to further contain an organic acid(s) from the viewpoint of suppressing in-mouth astringency more. Such an organic acid(s) may be one or more organic acids selected from the group consisting of citric acid, malic acid, tartaric acid, lactic acid, gluconic acid, succinic acid, pyruvic acid, formic acid, phytic acid, and acetic acid or one or more organic acids selected from the group consisting of citric acid, malic acid, tartaric acid, lactic acid, gluconic acid, and succinic acid. Preferred are one or more organic acids selected from the group consisting of citric acid, malic acid, tartaric acid, and lactic acid. From the viewpoint of suppressing in-mouth astringency more, more preferred are one or more organic acids selected from the group consisting of citric acid, malic acid, and tartaric acid. When an organic acid-containing beverage of the present invention is produced, an organic acid(s) may be used or a salt of organic acid or an organic acid-containing composition may be used. The salt is not particularly limited, and is, for example, a sodium salt, a potassium salt, or a calcium salt.

When the beverage of the present invention contains an organic acid(s), the total content of organic acids (e.g., one or two organic acids selected from any of the above-mentioned group of organic acids) in the beverage is not particularly limited. From the viewpoint of suppressing in-mouth astringency more, the total content is preferably 0.005 wt% or more, more preferably 0.01 wt% or more, still more preferably 0.05 wt% or more, still more preferably 0.12 wt% or more, and still more preferably 0.4 wt% or more or 0.5 wt% or more based on the total beverage content. The upper limit is, for example, less than 0.7 wt%, 0.65 wt% or less, 0.6 wt% or less, or 0.5 wt% or less. Note that when a salt of organic acid is used, the organic acid content (wt%) is calculated by converting the salt of organic acid in terms of the organic acid.

When the beverage of the present invention contains an organic acid(s), the total content of organic acids (e.g., one or two organic acids selected from any of the above-mentioned group of organic acids) in the beverage is provided in another embodiment. Here, the total content of organic acid(s) (e.g., one or two organic acids selected from any of the above-mentioned group of organic acids) in the beverage is preferably 1 × 10⁻⁴ mol/L or more, or 1 × 10⁻³ mol/L or more, and more preferably 3 × 10⁻³ L or more, or 5 × 10⁻³ mol/L or more, or 2.6 × 10⁻² mol/L or more. The upper limit is, for example, 3.6 × 10₋₂ mol/L or less, 3.4 × 10⁻² mol/L or less, or 3.1 × 10⁻² mol/L or less. Note that a salt of organic acid is used, the organic acid content (mol/L) is calculated by converting the salt of organic acid in terms of the organic acid.

The total content of organic acid(s) in the beverage of the present invention may be adjusted by adjusting the amount of organic acid(s) or their salt(s) or organic acid-containing composition used.

The content of organic acid(s) in the beverage of the present invention may be calculated by measuring the analyte organic acid(s) by, for instance, HPLC.

The ratio of the total amount of organic acid(s) to the magnesium concentration, i.e., (Total amount [wt%] of organic acid (s))/(Magnesium concentration [mg/L]), is not particularly limited. From the viewpoint of producing a higher effect of suppressing in-mouth astringency, the lower limit is, for example, 0.00001 or more, 0.00003 or more, 0.0001 or more, 0.001 or more, or 0.01 or more. The upper limit is, for example, 0.5 or less, 0.1 or less, or 0.05 or less. These lower and upper limits may be each optionally combined.

### (Beverage of the present invention)

The beverage of the present invention is not particularly limited as long as the beverage is a packaged sugar-free beverage comprising 500 million cells/L or more (e.g., 20 billion cells/L or more) of dead bacterial cells of one or more types of lactic acid bacteria and/or bacteria in the present invention 1 and magnesium in a concentration of 1.2 mg/L or more.

The beverage of the present invention is a packaged sugar-free beverage comprising 500 million cells/L or more **(e.g.,** 20 billion cells/L or more) of dead bacterial cells of one or more types of lactic acid bacteria and/or bacteria in the present invention 1 and magnesium in a concentration of 1.2 mg/L or more. Other than this, there is no particular difference from ordinary "packaged sugar-free beverages" in terms of production raw materials used, production methods, and production conditions.

The type of beverage of the present invention is not particularly limited as long as it is a packaged sugar-free beverage, but it is preferred to be a packaged sugar-free carbonated beverage

In addition, the beverage of the present invention may be a chilled beverage (i.e., a beverage that is maintained under refrigerated conditions at 0°C to 10°C from the time of production through the process of distribution and sale), or it may be a non-chilled beverage.

The beverage of the present invention may be produced by being adjusted, at any of steps in a typical production method, to 500 million cells/L or more (e.g., 20 billion cells/L or more) of dead bacterial cells of one or more types of lactic acid bacteria and/or bacteria in the present invention 1 and magnesium in a concentration of 1.2 mg/L or more.

The beverage of the present invention is a packaged beverage. Examples of a container therefor include a resin bottle container (e.g., a PET bottle, a polypropylene bottle, a polyvinyl chloride bottle); a bin container; a can container; and other containers.

The beverage of the present invention does not have to be heat-sterilized, but may be heat-sterilized from the viewpoint of shelf life improvement. As for the methods and conditions of heat sterilization treatment, it is possible to use common methods and conditions used for beverages such as packaged beverages.

### (Production method of the present invention)

The production method of the present invention is not particularly limited as long as it is a method for producing a packaged sugar-free beverage containing magnesium in a concentration of 1.2 mg/L or more, the method comprising including, in the beverage, 500 million cells/L or more (e.g., 20 billion cells/L or more) of dead bacterial cells of one or more types of lactic acid bacteria and/or bacteria in the present invention 1 in the production of the packaged sugar-free beverage.

The beverage of the present invention can be produced according to a conventionally known method for producing a packaged sugar-free beverage, except that the dead bacterial cells of one or more types of lactic acid bacteria and/or bacteria in the present invention 1 are adjusted to 500 million cells/L or more (e.g., 20 billion cells/L or more) and the magnesium is adjusted to a concentration of 1.2 mg/L or more.

More specific examples of the method of including, in the beverage, 500 million cells/L or more (e.g., 20 billion cells/L or more) of dead bacterial cells of one or more types of lactic acid bacteria and/or bacteria in the present invention 1 include a method of including 500 million cells/L or more (e.g., 20 billion cells/L or more) of dead bacterial cells of one or more types of lactic acid bacteria and/or bacteria in the present invention 1 in a production raw material for the beverage production (e.g., "water", "water containing 1.2 mg/L or more of magnesium", or "the water further containing part or all of given components in water") in the production of the packaged sugar-free beverage. Alternatively, the examples include a method of including, in water, "dead bacterial cells of one or more types of lactic acid bacteria and/or bacteria in the present invention 1" and "one or more materials selected from the group consisting of magnesium, magnesium compounds, and magnesium-containing compositions"; or a method of simultaneously including, in water, the above components and part or all of given components.

More specific examples of the method of setting (preferably, the method of adjusting) the magnesium concentration in the beverage to 1.2 mg/L or more include a method of setting the magnesium concentration in the beverage to 1.2 mg/L or more by including "one or more materials selected from the group consisting of magnesium, magnesium compounds, and magnesium-containing compositions" in a production raw material for the beverage production (e.g., "water", "water containing 500 million cells/L or more (e.g., 20 billion cells/L or more) of dead bacterial cells of one or more types of lactic acid bacteria and/or bacteria in the present invention 1", or "the water further containing part or all of given components in water") in the production of the packaged sugar-free beverage. Alternatively, the examples include: a method of including, in water, "dead bacterial cells of one or more types of lactic acid bacteria and/or bacteria in the present invention 1" and "one or more materials selected from the group consisting of magnesium, magnesium compounds, and magnesium-containing compositions"; or a method of simultaneously including, in water, the above components and part or all of given components.

In the production method of the present invention, dead bacterial cells of a lactic acid bacterium and/or a bacterium in the present invention 1 and magnesium are included in the beverage as essential ingredients. The production method of the present invention may comprise including, in the beverage, any one or more additives selected from organic acids, pigments, flavoring agents, acidulants (excluding organic acids), antioxidants, preservatives, thickening stabilizers, emulsifying agents, and pH-adjusting agents as given components.

In the production method of the present invention, there are no particular restrictions on, for instance, the order in which the production raw materials are included as long as the beverage of the present invention can be produced. After the liquid in which the production raw materials are mixed is prepared, the liquid may be filled into a container and the container may be sealed to prepare the beverage of the present invention.

In the production method of the present invention, the beverage does not have to be heat-sterilized, but may be heat-sterilized from the viewpoint of shelf life improvement. Examples of the heat sterilization method include, but are not particularly limited to, high temperature short time sterilization (HTST method), pasteurization, ultra high temperature heat treatment (UHT method), and retort sterilization.

### (Suppression method of the present invention)

The suppression method of the present invention is not particularly limited as long as it is a method of suppressing in-mouth astringency during drinking of a packaged sugar-free beverage containing magnesium in a concentration of 1.2 mg/L or more, the method comprising including, in the beverage, 500 million cells/L or more (e.g., 20 billion cells/L or more) of dead bacterial cells of one or more types of lactic acid bacteria and/or bacteria in the present invention 1 in the production of the packaged sugar-free beverage.

The method of including, in the beverage, 500 million cells/L or more (e.g., 20 billion cells/L or more) of dead bacterial cells of one or more types of lactic acid bacteria and/or bacteria in the present invention 1 and the method of setting the magnesium concentration in the beverage to 1.2 mg/L or more may use substantially the same methods as the methods described above (the production method of the present invention).

### (To suppress specific in-mouth astringency)

The beverage of the present invention is a beverage with suppressed in-mouth astringency specific to a packaged sugar-free beverage containing magnesium in a concentration of 1.2 mg/L or more.

The above "in-mouth astringency" herein means "astringency causing the tongue and throat area to tighten", more specifically, "sensation causing the tongue and throat area to tighten like cramping, leading to fatigue".

In the present invention, the beverage "with suppressed in-mouth astringency" means a beverage with suppressed in-mouth astringency during drinking when compared with a beverage produced by the same production method using the same type of raw materials at the same final concentrations (hereinafter also indicated as "control beverage"), except that dead bacterial cells of one or more types of lactic acid bacteria and/or bacteria in the present invention 1 are not included.

Trained panelists can easily and clearly determine how much "in-mouth astringency" is produced by a certain beverage and how is the "in-mouth astringency" is like (e.g., suppressed or not) when compared with the control beverage. General procedures may be used for the evaluation criteria and for finalizing the evaluations among the panelists. The number of panelists who evaluate the sensory qualities in the present invention may be one. From the viewpoint of obtaining more objective evaluation, the lower limit of the number of panelists may be set to, for example, 2 or more and preferably 4 or more. From the viewpoint of simplifying the evaluation test, the upper limit of the number of panelists may be set to, for example, 20 or less, 10 or less, or 7 or less. The rating of the in-mouth astringency caused by each beverage in the case of two or more panelists may use, for example, the average of all panelists' ratings for the in-mouth astringency caused by the beverage, or may use the lowest rating among the panelists. If a score is assigned to each evaluation criterion, the average of all panelists' scores may be used as the beverage's in-mouth astringency rating, or the lowest score among the panelists may be used. As mentioned above, when the score average is adopted, the value rounded to the first or second decimal place (preferably the second decimal place) of the average may be adopted. In addition, the point closest to the average of respective panelists' points such as "1 point, 1.5 points, 2 points, 2.5 points, 3 points, 3.5 points, 4 points, 4.5 points, 5 points, 5.5 points, 6 points, 6.5 points, 7 points, 7.5 points, 8 points, 8.5 points, 9 points, 9.5 points, and 10 points" may be used to evaluate the in-mouth astringency caused by the beverage. Note that in the case of two or more panelists, the variation of each panelist's evaluation should be reduced. For this purpose, it is preferable to work on the sharing of evaluation criteria so that each panelist shares the evaluation criteria as much as possible before the actual sensory evaluation test is conducted. Such a work on the sharing includes evaluating, by each panelist, how the sensory qualities of multiple known standard beverages correspond to the grade of in-mouth astringency in the present invention, and then comparing the scores to make sure that each panelist has no significant difference in the evaluation criteria. In addition, it is preferable that such a work on the sharing of the evaluation criteria should be conducted in advance, so that the standard deviation of each panelist's in-mouth astringency score is within 0.5.

To evaluate how much in-mouth astringency in the present invention is caused in a certain beverage, for example, substantially the same method as the method using, for instance, the evaluation criteria (a 10-point scale from 1 point to 10 points) described in Study 1 and others of the below-described Examples or preferably the same method as the method using, for instance, the evaluation criteria (a 10-point scale from 1 point to 10 points) described in Study 1 and others of the below-described Examples may be suitably used. More specifically, a sensory evaluation test is performed by multiple panelists on a 10-point scale from 1 point to 10 points, the average of the scores is calculated, and the point closest to the average of respective panelists' points on a 19-point scale (i.e., "1 point, 1.5 points, 2 points, 2.5 points, 3 points, 3.5 points, 4 points, 4.5 points, 5 points, 5.5 points, 6 points, 6.5 points, 7 points, 7.5 points, 8 points, 8.5 points, 9 points, 9.5 points, and 10 points") is evaluated as the grade of in-mouth astringency caused by the beverage. This method may be suitably used. Such a method may be used to evaluate in-mouth astringency. In this case, a beverage with a score at least one scale(i.e., 0.5 points) lower than that of the control beverage is considered to be a beverage with suppressed in-mouth astringency. The beverage with a score preferably at least 2 scales (i.e. 1 point), more preferably at least 3 scales (i.e. 1.5 points), still more preferably at least 4 scales (i.e. 2 points), still more preferably at least 5 scales (i.e. 2.5 points), still more preferably at least 6 scales (i.e. 3 points), still more preferably at least 7 scales (i.e. 3.5 points), still more preferably at least 8 scales (i.e. 4 points), still more preferably at least 9 scales (i.e. 4.5 points), and still more preferably at least 10 scales (i.e., 5 points) lower than that of the control beverage is suitably listed as the beverage with suppressed in-mouth astringency.

Hereinafter, the present invention is described in detail with Examples, but the present invention is not limited to these Examples.

### Examples

### [Study 1] To check occurrence of "in-mouth astringency" during drinking of sugar-free beverage containing magnesium

The following study was conducted to determine how the inclusion of magnesium in a sugar-free beverage affected the flavor of the sugar-free beverage.

### (1. To prepare sample beverage of sugar-free beverage)

Each of the sample beverages in Test Examples 1 to 11 was prepared by adding magnesium chloride to ion-exchanged water so that the magnesium concentration would reach the concentrations listed in Table 1.

### (2. Sensory evaluation test)

As "in-mouth astringency", "astringency causing the tongue and throat area to tighten", more specifically, "sensation causing the tongue and throat area to tighten like cramping, leading to fatigue" when a sugar-free beverage was ingested was a subject of evaluation criteria.

The grade of "in-mouth astringency" during drinking of each beverage sample of Test Examples 1 to 11 obtained was evaluated, in a sensory evaluation test, by 4 trained expert panelists using a 10-point scale (1, 2, 3, 4, 5, 6, 7, 8, 9, and 10 points). The evaluation criteria were set such that the grade of "in-mouth astringency" caused by the sample beverage (magnesium concentration: 0.0 mg/L) of Test Example 1 was assigned 1 point ("no in-mouth astringency"); in addition, the grade of "in-mouth astringency" caused by the sample beverage (magnesium concentration: 145.7 mg/L) of Test Example 11 was assigned 10 points ("very strong in-mouth astringency"); and the evaluation criteria, in which the grade of in-mouth astringency was divided according to the above-mentioned 10-point scale, were adopted. In such evaluation criteria, the higher the point, the greater the grade of in-mouth astringency.

In addition, the score value closest to the average of respective panelists' scores such as each point: "1, 1.5, 2, 2.5, 3, 3.5, 4, 4.5, 5, 5.5, 6, 6.5, 7, 7.5, 8, 8.5, 9, 9.5, or 10 points" on a 19-point scale was used to evaluate the in-mouth astringency caused by each Test Example sample. The standard deviation of each panelist's score for each sample beverage was 0.43 or less in any of the sample beverages.

Table 1 shows the results of such a sensory evaluation test.

**[Table 1]**

| Test Example | Mg concentration (mg/L) | In-mouth astringency |
|---|---|---|
| 1 | 0.0 | 1 |
| 2 | 1.2 | 1.5 |
| 3 | 2.4 | 3 |
| 4 | 4.9 | 4 |
| 5 | 7.3 | 5.5 |
| 6 | 9.7 | 6.5 |
| 7 | 12.1 | 7.5 |
| 8 | 24.3 | 8.5 |
| 9 | 77.7 | 9.5 |
| 10 | 109.3 | 10 |
| 11 | 145.7 | 10 |

The results of Table 1 have demonstrated that when the magnesium concentration is 1.2 mg/L pr more, specific "in-mouth astringency" occurs and the in-mouth astringency becomes stronger in a magnesium concentration-dependent manner.

### [Study 2] How inclusion of dead bacterial cells of lactic acid bacterium affected in-mouth astringency

The following study was conducted to determine how the inclusion of dead bacterial cells of a lactic acid bacterium affected in-mouth astringency caused by a magnesium-containing sugar-free beverage.

### (1. To prepare sample beverage of sugar-free beverage)

Each sample beverage of Test Examples 13 to 19 was prepared by including magnesium chloride and dried dead bacterial cell powder of *Lactococcus lactis* subsp. *lactis* JCM5805 strain in ion-exchanged water so that the magnesium concentration and the concentration of dead bacterial cells of the lactic acid bacterium were concentrations described in Table 2. The sample beverages of Test Example 12 were also prepared in the same manner, except that the dried dead bacterial cell powder of *Lactococcus lactis* subsp. *lactis* JCM5805 strain was not used.

### (2. Sensory evaluation test)

The grade of "in-mouth astringency" during drinking of each beverage sample of Test Examples 12 to 19 obtained was evaluated, in a sensory evaluation test, by 4 trained expert panelists using a 10-point scale (1, 2, 3, 4, 5, 6, 7, 8, 9, and 10 points). The evaluation criteria were set such that the grade of "in-mouth astringency" caused by the sample beverage (magnesium concentration: 0.0 mg/L) of Test Example 1 in Table 1 was assigned 1 point ("no in-mouth astringency"); in addition, the grade of "in-mouth astringency" caused by the sample beverage of Test Example 11 in Table 1 was assigned 10 points ("very strong in-mouth astringency"); and the evaluation criteria, in which the grade of in-mouth astringency was divided according to the above-mentioned 10-point scale, were adopted.

In addition, the score value closest to the average of respective panelists' scores such as each point: "1, 1.5, 2, 2.5, 3, 3.5, 4, 4.5, 5, 5.5, 6, 6.5, 7, 7.5, 8, 8.5, 9, 9.5, or 10 points" on a 19-point scale was used to evaluate the in-mouth astringency caused by each Test Example sample. The standard deviation of each panelist's score for each sample beverage was 0.43 or less in any of the sample beverages.

Table 2 shows the results of such a sensory evaluation test.

**[Table 2]**

| Test Example | Mg concentration (mg/L) | Lactic acid bacterium concentration (100 million cells/L) | In-mouth astringency |
|---|---|---|---|
| 12 | 145.7 | 0 | 10 |
| 13 | | 150 | 10 |
| 14 | | 200 | 9 |
| 15 | | 250 | 7.5 |
| 16 | | 500 | 6.5 |
| 17 | | 1000 | 5.5 |
| 18 | | 2000 | 4.5 |
| 19 | | 4000 | 3.5 |

The results of Table 2 have demonstrated that inclusion of 20 billion cells/L or more of dead bacterial cells of a lactic acid bacterium in a magnesium-containing sugar-free beverage can produce an effect of suppressing in-mouth astringency.

### [Study 3] How combined use of dead bacterial cells of lactic acid bacterium and carbon dioxide gas affected in-mouth astringency

The following study was conducted to determine how the inclusion of carbon dioxide gas in addition to dead bacterial cells of a lactic acid bacterium affected in-mouth astringency caused by a magnesium-containing sugar-free beverage.

### (1. To prepare sample beverage of sugar-free beverage)

Sample beverages of Test Example 21 were prepared by including magnesium chloride and dried dead bacterial cell powder of *Lactococcus lactis* subsp. *lactis* JCM5805 strain in carbon dioxide gas-containing ion-exchanged water so that the magnesium concentration and the concentration of dead bacterial cells of the lactic acid bacterium were concentrations described in Table 3. The sample beverages of Test Example 20 were prepared in the same manner, except that the dried dead bacterial cell powder of *Lactococcus lactis* subsp. *lactis* JCM5805 strain was not used.

### (2. Sensory evaluation test)

The grade of "in-mouth astringency" during drinking of each beverage sample of Test Example 20 or 21 obtained was evaluated, in a sensory evaluation test, by 4 trained expert panelists using a 10-point scale (1, 2, 3, 4, 5, 6, 7, 8, 9, and 10 points). The evaluation criteria were set such that the grade of "in-mouth astringency" caused by the sample beverage (magnesium concentration: 0.0 mg/L) of Test Example 1 in Table 1 was assigned 1 point ("no in-mouth astringency"); in addition, the grade of "in-mouth astringency" caused by the sample beverage of Test Example 11 in Table 1 was assigned 10 points ("very strong in-mouth astringency"); and the evaluation criteria, in which the grade of in-mouth astringency was divided according to the above-mentioned 10-point scale, were adopted.

In addition, the score value closest to the average of respective panelists' scores such as each point: "1, 1.5, 2, 2.5, 3, 3.5, 4, 4.5, 5, 5.5, 6, 6.5, 7, 7.5, 8, 8.5, 9, 9.5, or 10 points" on a 19-point scale was used to evaluate the in-mouth astringency caused by each Test Example sample. The standard deviation of each panelist's score for each sample beverage was 0.43 or less in any of the sample beverages.

Table 3 shows the results of such a sensory evaluation test.

**[Table 3]**

| Test Example | Mg concentration (mg/L) | Lactic acid bacterium concentration (100 million cells/L) | Gas pressure (MPa) | In-mouth astringency |
|---|---|---|---|---|
| 20 | 145.7 | 0 | 0.2 | 8 |
| 21 | | 4000 | | 3 |

The results of Table 3 have demonstrated that even the case where the magnesium-containing sugar-free beverage is a carbonated beverage can produce an effect of suppressing in-mouth astringency. Further, when Test Example 21 in Table 3, which is a carbonated beverage, and Test Example 19 (Table 2), which is not a carbonated beverage, are compared, the in-mouth astringency has been found to be more suppressed in Test Example 21, which is a carbonated beverage.

### [Study 4] How combined use of dead bacterial cells of lactic acid bacterium and organic acid affected in-mouth astringency

The following study was conducted to determine how the inclusion of an organic acid in addition to dead bacterial cells of a lactic acid bacterium affected in-mouth astringency caused by a magnesium-containing sugar-free beverage.

### (1. To prepare sample beverage of sugar-free beverage)

Each of Test Examples 24 to 28 was prepared by including magnesium chloride and dried dead bacterial cell powder of *Lactococcus lactis* subsp. *lactis* JCM5805 strain in carbon dioxide gas-containing ion-exchanged water and including each acidulant listed in Table 4 at 6.3 × 10⁻³ mol/L so that the magnesium concentration and the concentration of dead bacterial cells of the lactic acid bacterium were concentrations described in Table 4. The sample beverages of Test Example 23 were also prepared in the same manner, except that no acidifier was used. The sample beverages of Test Example 22 were also prepared in the same manner, except that neither the acidulant nor the dried dead bacterial cell powder of *Lactococcus lactis* subsp. *lactis* JCM5805 strain was used.

### (2. Sensory evaluation test)

The grade of "in-mouth astringency" during drinking of each beverage sample of Test Examples 22 to 28 obtained was evaluated, in a sensory evaluation test, by 4 trained expert panelists using a 10-point scale (1, 2, 3, 4, 5, 6, 7, 8, 9, and 10 points). The evaluation criteria were set such that the grade of "in-mouth astringency" caused by the sample beverage (magnesium concentration: 0.0 mg/L) of Test Example 1 in Table 1 was assigned 1 point ("no in-mouth astringency"); in addition, the grade of "in-mouth astringency" caused by the sample beverage of Test Example 11 in Table 1 was assigned 10 points ("very strong in-mouth astringency"); and the evaluation criteria, in which the grade of in-mouth astringency was divided according to the above-mentioned 10-point scale, were adopted.

In addition, the score value closest to the average of respective panelists' scores such as each point: "1, 1.5, 2, 2.5, 3, 3.5, 4, 4.5, 5, 5.5, 6, 6.5, 7, 7.5, 8, 8.5, 9, 9.5, or 10 points" on a 19-point scale was used to evaluate the in-mouth astringency caused by each Test Example sample. The standard deviation of each panelist's score for each sample beverage was 0.43 or less in any of the sample beverages.

Table 4 shows the results of such a sensory evaluation test.

**[Table 4]**

| Test Example | Mg concentration (mg/L) | Lactic acid bacterium concentration (100 million cells/L) | Gas pressure (MPa) | Acidulant | In-mouth astringency |
|---|---|---|---|---|---|
| 22 | 145.7 | 0 | 0.2 | - | 8 |
| 23 | | 4000 | | - | 3 |
| 24 | | | | Citric acid | 2 |
| 25 | | | | Lactic acid | 2.5 |
| 26 | | | | Malic acid | 2 |
| 27 | | | | Tartaric acid | 2 |
| 28 | | | | Phosphoric acid | 3 |

The results of Table 4 have demonstrated that when phosphoric acid, i.e., an inorganic acid, was further included, there was no change in in-mouth astringency (Test Example 28 compared to Test Example 23) ; but when an organic acid, namely citric acid, lactic acid, malic acid, or tartaric acid is further included, the in-mouth astringency has been found to be further suppressed (Test Examples 24 to 27 compared to Test Example 23).

### [Study 5] How citric acid concentration when citric acid was used in combination with dead bacterial cells of lactic acid bacterium affected in-mouth astringency

The following study was conducted to determine how the concentration of citric acid when the citric acid was used in combination with dead bacterial cells of a lactic acid bacterium affected in-mouth astringency.

### (1. To prepare sample beverage of sugar-free beverage)

Each of Test Examples 31 to 37 was prepared by including magnesium chloride, dried dead bacterial cell powder of *Lactococcus lactis* subsp. *lactis* JCM5805 strain, and citric acid in carbon dioxide gas-containing ion-exchanged water so that the magnesium concentration, the concentration of dead bacterial cells of the lactic acid bacterium, and the citric acid concentration were respective concentrations described in Table 5. The sample beverages of Test Example 30 were also prepared in the same manner, except that no citric acid was used. The sample beverages of Test Example 29 were also prepared in the same manner, except that neither citric acid nor the dried dead bacterial cell powder of *Lactococcus lactis* subsp. *lactis* JCM5805 strain was used.

### (2. Sensory evaluation test)

The grade of "in-mouth astringency" during drinking of each beverage sample of Test Examples 29 to 37 obtained was evaluated, in a sensory evaluation test, by 4 trained expert panelists using a 10-point scale (1, 2, 3, 4, 5, 6, 7, 8, 9, and 10 points). The evaluation criteria were set such that the grade of "in-mouth astringency" caused by the sample beverage (magnesium concentration: 0.0 mg/L) of Test Example 1 in Table 1 was assigned 1 point ("no in-mouth astringency"); in addition, the grade of "in-mouth astringency" caused by the sample beverage of Test Example 11 in Table 1 was assigned 10 points ("very strong in-mouth astringency"); and the evaluation criteria, in which the grade of in-mouth astringency was divided according to the above-mentioned 10-point scale, were adopted.

In addition, the score value closest to the average of respective panelists' scores such as each point: "1, 1.5, 2, 2.5, 3, 3.5, 4, 4.5, 5, 5.5, 6, 6.5, 7, 7.5, 8, 8.5, 9, 9.5, or 10 points" on a 19-point scale was used to evaluate the in-mouth astringency caused by each Test Example sample. The standard deviation of each panelist's score for each sample beverage was 0.43 or less in any of the sample beverages.

Table 5 shows the results of such a sensory evaluation test.

**[Table 5]**

| Test Example | Mg concentration (mg/L) | Lactic acid bacterium concentration (100 million cells/L) | Gas pressure (MPa) | Concentration (%) of citric acid added | In-mouth astringency |
|---|---|---|---|---|---|
| 29 | | 0 | | - | 8 |
| 30 | | 4000 | | - | 3 |
| 31 | | | | 0.005 | 2 |
| 32 | | | | 0.01 | 2 |
| 33 | 145.7 | | 0.2 | 0.05 | 2 |
| 34 | | | | 0.12 | 2 |
| 35 | | | | 0.4 | 1.5 |
| 36 | | | | 0.5 | 1.5 |
| 37 | | | | 0.7 | 1.5 |

The results in Table 5 have demonstrated that the inclusion of 0.005 wt% or more of citric acid in addition to dead bacterial cells of a lactic acid bacterium can suppress in-mouth astringency more. Note that in Test Example 37, which contained 0.7 wt% of citric acid, the in-mouth astringency was sufficiently suppressed, but the sour taste derived from citric acid was strong.

### [Study 6] Preparation Example in case of using Lactobacillus rhamnosus CRL1505, i.e., lactic acid bacterium other than Lactococcus lactis subsp. lactis JCM5805

Instead of dead bacterial cells of *Lactococcus lactis* subsp. *lactis* JCM5805, dead bacterial cells of *Lactobacillus rhamnosus* CRL1505 were used to make a prototype of a magnesium-containing sugar-free beverage (with dead bacterial cells of *Lactobacillus rhamnosus* CRL1505: 1.3 billion cells/L, 15 billion cells/L, etc.) according to the method described in Study 2 above. Then, the dead bacterial cells of *Lactobacillus rhamnosus* CRL1505 were found to suppress the in-mouth astringency.

### Industrial Applicability

The present invention can provide a packaged sugar-free beverage such that "in-mouth astringency" specific to a sugar-free beverage containing magnesium in a prescribed concentration is suppressed, a production method therefor, and others.

## Claims

1. A packaged sugar-free beverage comprising 500 million cells/L or more of dead bacterial cells of one or more types of lactic acid bacteria and magnesium in a concentration of 1.2 mg/L or more.

2. The packaged sugar-free beverage according to claim 1, which is a carbonated beverage having a gas pressure of from 0.1 to 0.3 MPa.

3. The packaged sugar-free beverage according to claim 1 or 2, further comprising one or more organic acids, wherein a total concentration of the organic acids is from 0.005 to 0.5% by weight.

4. A packaged sugar-free beverage comprising 500 million cells/L or more of dead bacterial cells of one or more types of lactic acid bacteria and magnesium in a concentration of 1.2 mg/L or more, wherein the lactic acid bacteria are one or more types selected from the group consisting of bacteria of the genus *Lactobacillus,* bacteria of the genus *Streptococcus,* bacteria of the genus *Lactococcus,* bacteria of the genus *Leuconostoc,* bacteria of the genus *Pediococcus,* bacteria of the genus *Enterococcus,* bacteria of the genus *Oenococcus,* bacteria of the genus *Bifidobacterium,* bacteria of the genus *Lentilactobacillus,* bacteria of the genus *Weissella,* and bacteria of the genus *Tetragenococcus.*

5. The packaged sugar-free beverage according to claim **4,** wherein the lactic acid bacteria are *Lactobacillus rhamnosus.*

6. A packaged sugar-free beverage comprising 500 million cells/L or more of dead bacterial cells of one or more types of bacteria capable of activating plasmacytoid dendritic cells, and magnesium in a concentration of **1.2** mg/L or more.

7. A method for producing a packaged sugar-free beverage containing magnesium in a concentration of **1.2** mg/L or more, the method comprising including, in the beverage, 500 million cells/L or more of dead bacterial cells of one or more types of bacteria capable of activating plasmacytoid dendritic cells in the production of the packaged sugar-free beverage.

8. A method for producing a packaged sugar-free beverage containing magnesium in a concentration of **1.2** mg/L or more, the method comprising including, in the beverage, 500 million or more cells/L of dead bacterial cells of one or more types of lactic acid bacteria in the production of the packaged sugar-free beverage.

9. A method of suppressing in-mouth astringency during drinking of a packaged sugar-free beverage containing magnesium in a concentration of 1.2 mg/L or more, the method comprising including, in the beverage, 500 million cells/L or more of dead bacterial cells of one or more types of bacteria capable of activating plasmacytoid dendritic cells in the production of the packaged sugar-free beverage.

10. A method of suppressing in-mouth astringency during drinking of a packaged sugar-free beverage containing magnesium in a concentration of 1.2 mg/L or more, the method comprising including, in the beverage, 500 million cells/L or more of dead bacterial cells of one or more types of lactic acid bacteria in the production of the packaged sugar-free beverage.
